# EUROPEAN PATENT SPECIFICATION

(11) **EP 0 689 739 B1**
(45) Date of publication and mention of the grant of the patent: **29.01.1997**
(21) Application number: 94908241.6
(22) Date of filing: 10.03.1994
(51) Int. Cl.: H04B 1/38, H01Q 1/24

(54) **RADIO FREQUENCY RADIATION SHIELD FOR HAND-HELD RADIO PHONE**
RADIOFREQUENZABSCHIRMUNG FÜR EIN TRAGBARES FUNKGERÄT
BLINDAGE CONTRE LE RAYONNEMENT RADIOELECTRIQUE POUR UN RADIOTELEPHONE PORTATIF

(30) Priority: 15.03.1993 CA 2091628
(43) Date of publication of application: 03.01.1996
(73) Proprietor: BICKERT, Paul F., Kelowna, British Columbia V1W 3C8 (CA)
(72) Inventor: BICKERT, Paul F., Kelowna, British Columbia V1W 3C8 (CA)
(74) Representative: Fane, Christopher Robin King
(86) International application number: CA9400126
(87) International publication number: WO9422233

(56) References cited:
- US-A- 5 012 114
- PATENT ABSTRACTS OF JAPAN vol. 16, no. 570 (E-1297) 10 December 1992 & JP,A,04 220 851 (MITSUBISHI) 11 August 1992

## Description

The present invention relates to radio frequency radiation shields for hand-held radio phones, more particularly a shield for the antenna of such a phone.

Cellular and other radio telephones which are hand-held typically have antennas which extend from the housing of the phone. While the phone is in use the antenna and ear-piece emit radiation which has caused concern among the medical community as to the radiation's effects on the user if the user is a frequent user over a long period of time.

The use of flexible protective shields to protect personnel against X-ray frequency and Gamma frequency radiation such as may be emitted by X-ray machines or by nuclear reactors, respectively, is known in the art as illustrated by U.S. Patent No. 3,039,001 entitled "Flexible Protective Plastic Shield" and by United States Patent No. 5,012,114 entitled "Radiation Shield".

United States Patent No. 3,039,001 discloses that a sheet of vinyl or other plastic material containing resin, plasticizer and stabilizer may have a protective material such as pulverized lead uniformly distributed therethrough in order to provide a flexible sheet of material which protects the wearer against X-rays, Gamma rays, Neutron rays, secondary cosmic rays and the like.

United States Patent No. 5,012,114 discloses a gamma radiation shield which comprises a wrappable sheet of gamma radiation shielding material to which is affixed releasable contact-fasteners, which are so dimensioned and configured that when a shield member is wrapped around a gamma radiation emitting structure, complimentary locking portions of the releasable fasteners engage each other to securely hold the shield member in shielding position wrapped around the structure. The gamma radiation shielding material may be comprised of the known construction of fine lead powder being uniformly dispersed in a matrix of thermo-plastic material which serves as a binder for the lead powder so as to form a flexible sheet. The releasable contact fasteners may be of a type sold under the trade-mark Velcro. The patent is directed to protecting personnel in nuclear reactors and the like by shielding conduits such as pipes, most clearly seen in Figure 6 of the patent, through which radioactive material flows.

The use of electromagnetic shielding to minimize interference between electromagnetic signals radiated by cellular phones and like electronic equipment with another portion of that equipment and the minimization of such interference by interposing electrically conducting material in the form of a shield between the source of the electromagnetic signals and the circuitry subject to interference is taught by United States Patent No. 5,124,889 entitled "Electromagnetic Shielding Apparatus for Cellular Phones". The reference to electromagnetic shielding does not appear to be concerned with protecting the user of the electronic device from radiation from the antenna or the like.

Although no scientific studies have yet linked cellular or hand-held radio telephones to cancer or any other health hazard, the effects of long-term exposure to radio waves are not fully understood. United States federal health officials have recommended limiting such telephones' use.

Approximately 60% of new telephone sales are of the hand-held type. With these models, radio waves that carry the call emanate directly from the telephone while the telephone is held to the ear of the user. There is concern that the radio frequency waves entering the user's head may cause cancer.

Patent Abstracts of Japan, vol. 16, No.570 (E-1297), relating to Japanese Patent Publication JP-A-04 220 851, discloses a radio telephone handset having a side face coated with an electromagnetic wave shielding member for providing a conventional electromagnetic shielding effect between the handset and the user's head.

There is currently being marketed in prototype form a cellular phone radiation shield being sold under the trade-mark "Cellguard", manufactured by Quantum Laboratories of Renton, Washington, U.S.A. The "Cellguard" device consists of two sections of molded plastic, each with metal inside, that serves to block or deflect the radio frequency signal. One part of the device covers the phone's antenna and the other part fits over the earpiece of the phone. The metal parts of the device are grounded by being connected electrically to a casing of the phone.

In contrast, according to the present invention there is provided a radio frequency radiation shield for a hand-held radio phone antenna, which shield is releasably mountable so as to extend along the antenna and around substantially one-half of the circumference of the antenna and is made of a flexible material impregnated with heavy metal.

The heavy metal may be lead, and the flexible material may be a polyvinyl material.

An embodiment of the present invention can provide a flexible slip-on or otherwise releasably mountable light-weight radio frequency radiation shield for use on a hand-held radio phone antenna so as to shield the user's head from radiation emitted from the antenna.

In an embodiment of the present invention, a strip of light-weight flexible lead impregnated shielding material which may be commercially purchased as "Lead Vinyl Sheeting" from New Process of Portland, Oregon is glued or otherwise affixed to a larger rectangular strip of poly vinyl or like flexible material. The opposed longitudinal edges of the larger rectangular piece of flexible material have affixed thereto a conventional closing fastener such as Velcro (TM) hook and loop fastener so that the rectangular piece of flexible material may be wrapped around a hand-held phone antenna so as to enclose the antenna. In so doing, the strip of lead-impregnated flexible shielding material is also wrapped partly around the antenna circumference. The strip of lead-impregnated flexible shielding material is sufficiently wide to wrap approximately half-way around the circumference of the antenna. The shielding material is oriented so as to place the lead-impregnated flexible shielding strip between the antenna and the head of the user.

An additional piece of flexible shielding material may be affixed to the lower edge of the poly vinyl flexible material to act as a drape to cover the earpiece area of the phone. The drape may be wrapped around the ear-piece area of the phone and secured using strips of Velcro (TM) contact mating fasteners, and may be perforated or otherwise modified to reduce attenuation of any voice-frequency signal being emitted from the ear-piece speaker.

Advantageously, the antenna shield may be held in place by strips of Velcro (TM) fastening material or like fasteners which depend from the bottom of the antenna shield for releasable contact mating with corresponding fasteners affixed to the body of the phone.

An antenna shield embodying the present invention may also be formed as a simple sleeve which may be slipped over the antenna without the need for the Velcro (TM) closure.

Reference will now be made, by way of example, to the accompanying drawings, in which:
Figure 1 shows a perspective view of an antenna shield device embodying the present invention, unwrapped from an antenna and laid flat so as to expose a strip of light-weight flexible lead-impregnated shielding material;
Figure 2 shows a perspective view of an outer surface of the antenna shield device of Figure 1;
Figure 3 illustrates in perspective view an antenna shield device embodying the present invention, mounted on a typical hand-held radio phone antenna;
Figure 4 illustrates the antenna shield device of Figure 2 with an ear-piece shield added;
Figure 5 illustrates the antenna shield device of Figure 3, with an ear-piece shield added.

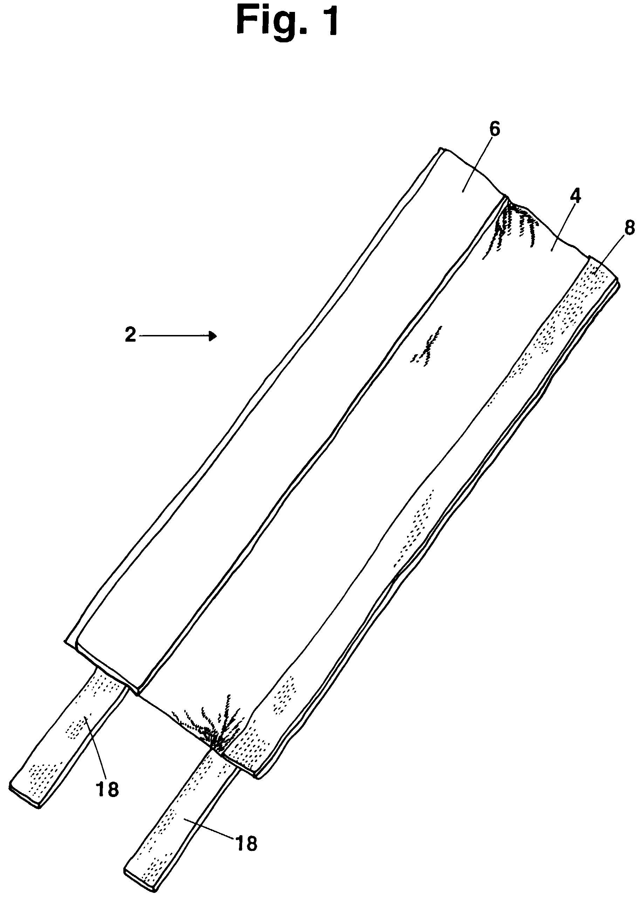

A hand-held radio phone antenna radio frequency radiation shield device 2 is illustrated in Figure 1 as it appears when it is laid flat so as to expose the inner surface of a flexible cover 4 and a shielding strip 6. Shielding strip 6 is light-weight flexible lead-impregnated material, which may be a poly vinyl matrix material, and which may be obtained commercially under the name "Lead Vinyl Sheeting". Shielding strip 6 is sufficiently wide so that when wrapped around a typical hand-held radio phone antenna, it will cover approximately half of the circumferential distance around the antenna. Shielding strip 6 is affixed to the inside surface of a flexible cover 4, and in the embodiment illustrated in Figure 1 is affixed along one edge of flexible cover 4, although the position of shielding strip 6 relative to the interior surface of flexible cover 4 does not affect the shielding function of the antenna shield devices 2 so long as shielding strip 6 is longitudinally aligned along flexible cover 4 and does not interfere with the operation of a fastening strip 8.

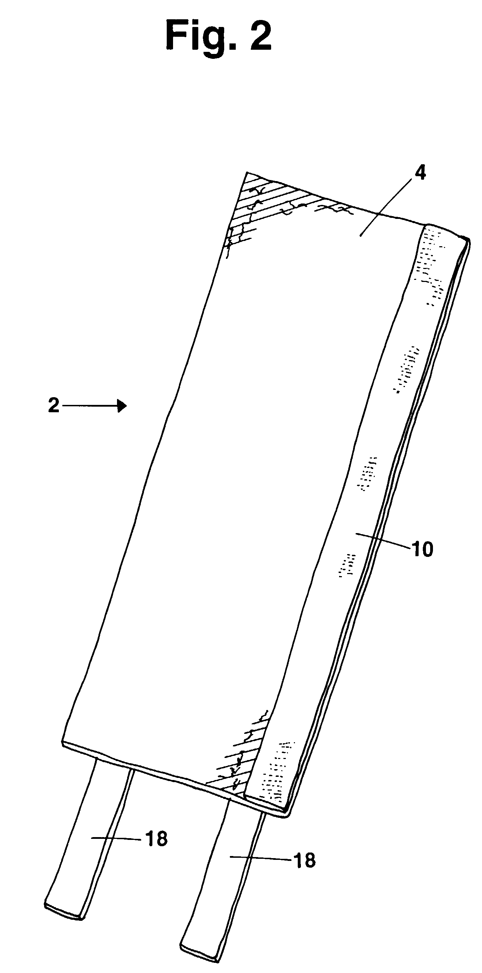

Shielding strip 6 may be affixed to flexible cover 4 using contact cement or like resilient adhesive. Fastening strip 8, as illustrated in Figure 1, is of the conventional contact mating hook and loop type sold under the trade-mark Velcro. Corresponding to the fastening strip 8 is a contact mating fastening strip 10 affixed to the outer surface of the opposite edge of flexible cover 4 as illustrated in Figure 2.

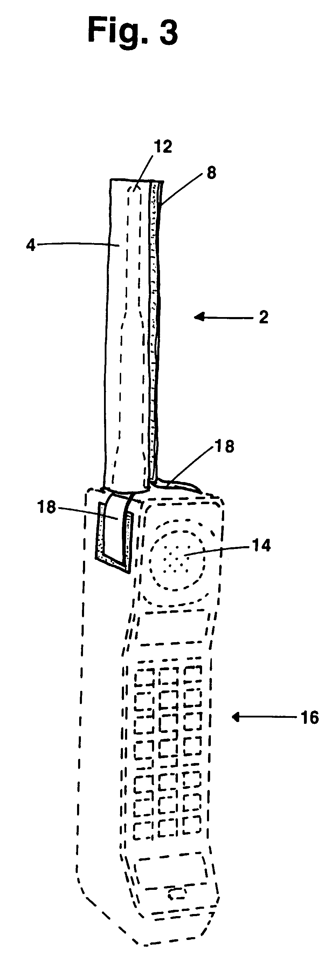

Because of the flexible nature of flexible cover 4 and shielding strip 6, the antenna shield device 2 may, as illustrated in Figure 3, be wrapped around the antenna 12 of a typical hand-held radio phone 16 so as to bring fastening strip 8 into mating contact with fastening strip 10.

The antenna shield device 2 is, once mounted on antenna 12, positioned about antenna 12 so as to place shielding strip 6 in a position closest to an earpiece 14 of the hand-held radio phone 16. This places shielding strip 6 between antenna 12 and the head of the user (not shown) of the hand-held phone 16.

It may be seen that varying degrees of protection may be obtained depending on the effectiveness of the shielding material (which in large part will be a function of the material's thickness) and on the amount of surface coverage of the surface of the antenna. For maximum protection of course the antenna would be encased in solid lead. Unfortunately this would prevent the phone from being used. What is considered to be an effective solution, one which somewhat protects the user of the phone without seriously affecting the phone's performance, is to wrap the antenna along its entire length but only around approximately one-half of the antenna's circumference (obviously that half closest to the head of the user).

If "Lead Vinyl Sheeting" shielding material is used, a thickness of between 3mm and 5mm is recommended. This corresponds to the thickness usually recommended for dental and medical X-ray applications, respectively. It is possible that reduced thicknesses provide to the user sufficient protection from radio-frequency radiation. However, there is no good reason to increase risk to the user, when thicker shielding material can be just as easily be incorporated into an embodiment of the present invention.

Additional Velcro (TM) fasteners 18 may be affixed to, and depend from, the lower-most edge of flexible cover 4. When antenna shield 2 is mounted on antenna 12, fasteners 18 may be employed to hold antenna shield 2 in the correct orientation relative to antenna 12. Fasteners 18 contact mate with corresponding fasteners which are glued or otherwise affixed to the casing of the hand-held phone 16.

Alternatively, fasteners 18 may contact mate with corresponding fasteners which are glued or otherwise affixed to a phone case or phone jacket (not shown) in which hand-held phone 16 is encased.

In a further embodiment, a resilient collar (not shown) may be inserted into the sleeve formed by the antenna shield device 2 when mounted on phone 16 in the position illustrated in Figure 3 and slipped over the tapered end of antenna 12 so as to hold the tapered end of antenna 12 snugly within the sleeve formed by the antenna shield device 2 and thus in fixed relation to shielding strip 6.

Alternatively, the resilient collar (not shown) for snugly supporting the tapered end of antenna 12 within the antenna shield device 2 may be comprised of a strip of resilient material, such as rubber, mounted transversely across the upper end of the inside surface of flexible cover 4 and shielding strip 6 so that when the antenna shield device 2 is mounted onto antenna 12 as illustrated in Figure 3, the strip of resilient material forms a collar around the tapered end of antenna 12.

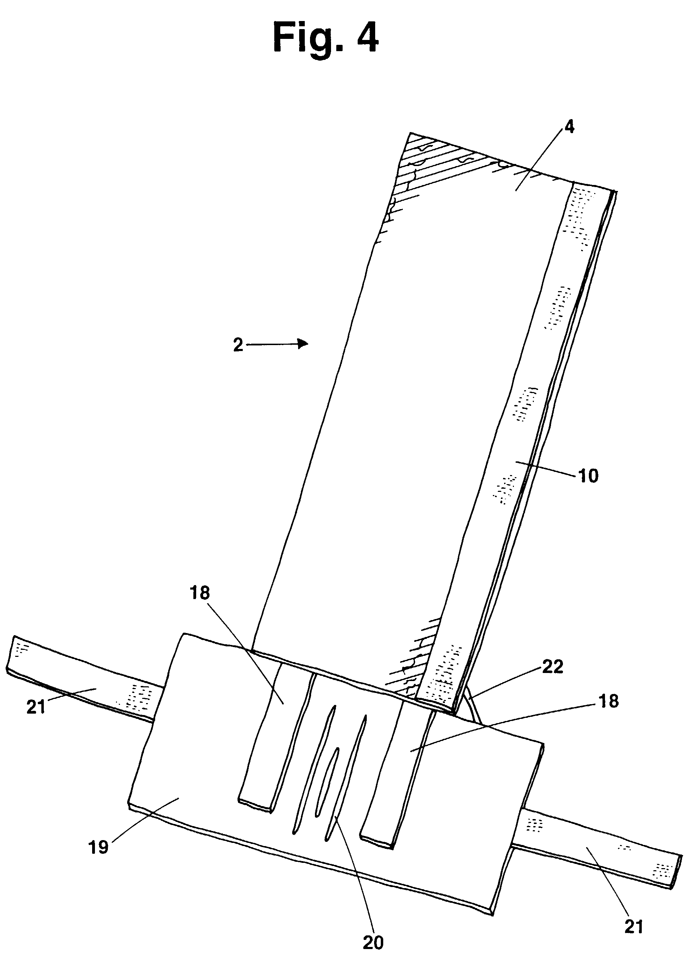

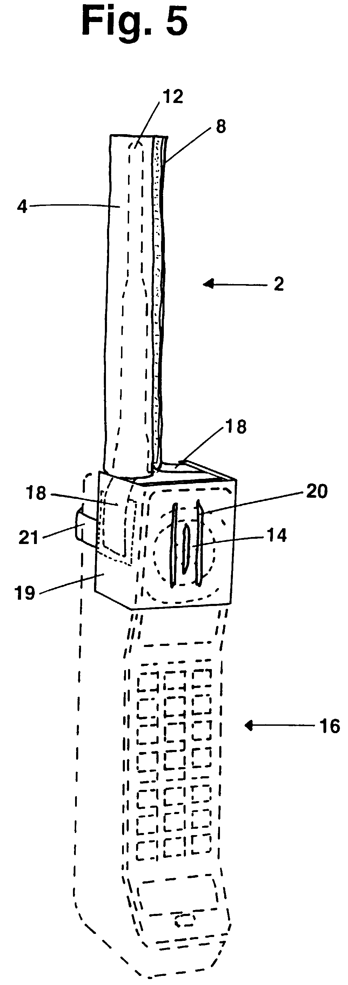

As illustrated in Figures 4 and 5, ear-piece shield 19, which is an additional piece of flexible shielding material similar to the material forming shielding trip 6, may be affixed so as to depend from the lower-most edge of flexible over 4 to form a drape to cover the ear-piece 14 of phone 16. The ear-piece shield may extend as illustrated, so as to wrap around ear-piece 14. Slits 20 are provided in ear-piece shield 19 so as to facilitate transmission through ear-piece shield 19 of voice-frequency emissions from the audio speaker associated with ear-piece 14. Ear-piece shield 19 may be held in place by rapping contact-mating fasteners 21 around the body of phone 16. It is understood that slits 20 may also be perforations or other means for providing radio-frequency shielding while minimizing attenuation of the voice frequency emission from ear-piece 14.

In a further and simplified embodiment, flexible cover 4 is manufactured as a sleeve so that fastening strips 8 and 10 are not required. The antenna shield device 2 may thus be mounted onto antenna 12 by slipping the shield over the antenna in the manner of a glove.

It is understood that materials described in the preferred embodiment above such as the poly-vinyl matrix which forms flexible cover 4 and the Velcro (TM)-type fasteners which comprise fasteners 8, 10, and 18 may be replaced by many other types of flexible materials or closing fasteners. For example, fastening strips 8 and 10 might be replaced by snaps or a zipper and fasteners 18 may be replaced by any other means to removably secure the shield device 2 relative to antenna 12. For example, an elasticized or otherwise resilient collar may be incorporated around the base of the shield device 2 so as to snugly retain the base of antenna 12 when the shield device 2 is mounted thereon. Alternatively, shielding strip 6 may be incorporated directly into the flexible protective covering on the antenna (possibly at point of manufacture of the phone) or may be "shrink-wrapped" onto the antenna.

It is understood that flexible lead-impregnated shielding material can also be flexible material impregnated with other heavy metal powder, shavings or the like, so long as the resulting flexible shielding material is substantially impervious to radio frequency emissions.

## Claims

1. A radio frequency radiation shield for a hand-held radio phone antenna (12), which shield (6) is releasably mountable so as to extend along the antenna (12) and around substantially one-half of the circumference of the antenna and is made of a flexible material impregnated with heavy metal.

2. A shield as claimed in claim 1, wherein the heavy metal is lead.

3. A shield as claimed in claim 1 or 2, wherein the said material is a poly-vinyl material.

## Patentansprüche

1. Radiofrequenz-Abschirmung für die Antenne (12) eines tragbaren Funktelefons, wobei die Abschirmung (6) lösbar befestigt ist, sich längs der Antenne (12) und im wesentlichen um den halben Umfang der Antenne erstreckt und hergestellt ist aus einem flexiblen Material, das mit Schwermetal imprägniert ist.

2. Abschirmung nach Anspruch 1, wobei das Schwermetal Blei ist.

3. Abschirmung nach Anspruch 1 oder 2, wobei das Material ein Polyvinyl ist.

## Revendications

1. Blindage contre le rayonnement radio-électrique pour une antenne (12) d'un radio-téléphone portatif, lequel blindage (6) est monté de manière amovible pour s'étendre le long de l'antenne (12) sur sensiblement la moitié de la circonférence de l'antenne et est fait d'un matériau souple imprégné d'un métal lourd.

2. Blindage selon la revendication 1, dans lequel le métal lourd est du plomb.

3. Blindage selon la revendication 1 ou 2, dans lequel ledit matériau est un matériau polyvinylique.
